# EUROPEAN PATENT SPECIFICATION

(11) **EP 2 869 383 B1**
(45) Date of publication and mention of the grant of the patent: **09.08.2017**
(21) Application number: 13808924.8
(22) Date of filing: 12.06.2013
(51) Int. Cl.: H01M 8/18, H01M 10/36, H01M 10/44

(54) **LARGE-CAPACITY POWER STORAGE DEVICE**
STROMSPEICHERVORRICHTUNG MIT SEHR HOHER KAPAZITÄT
DISPOSITIF DE STOCKAGE D'ÉNERGIE DE GRANDE CAPACITÉ

(30) Priority: 29.06.2012 JP 2012146280
(43) Date of publication of application: 06.05.2015
(73) Proprietor: Hitachi, Ltd., Tokyo 100-8280 (JP)
(72) Inventor: SUGIMASA, Masatoshi, Chiyoda-ku Tokyo 100-8280 (JP)
(74) Representative: Beetz & Partner mbB
(86) International application number: PCT/JP2013/066141
(87) International publication number: WO 2014/002755

(56) References cited:
- WO-A1-2010/118060
- WO-A1-2010/143634
- DE-A1- 4 333 181
- JP-A- S6 369 151
- US-A1- 2010 291 429
- US-A1- 2011 200 848

## Description

### Technical Field:

The present invention relates to a system for large-capacity storage of an electric power derived from a renewable energy.

### Background Art:

In recent years, a depletion of resources and an environmental destruction have become serious global problems, and a construction of a zero emission type society using renewable energy has been demanded. Since renewable energy power generation stations of a wind power generation, a solar photovoltaic power generation, etc. scarcely emit carbon dioxide during the power generation, their significant growth development in the feature is predicted. However, since the renewable energy is instable, it is difficult to supply the power corresponding to the demand. Further, an output fluctuation is present to give a significant effect on system lines. In order to overcome them, a power supply-demand imbalance is compensated by thermal power generation stations or pumping-up power generation. However, they involve problems, for example, that the thermal power generation stations emit carbon dioxide and the pumping-up power generation is restricted in a geographical location. Then, storage batteries capable of storing electric power in a large scale have attracted an attention.

Regarding the storage batteries for the power storage, various kinds of them different in constituent components and operation methods, for example, a lead storage battery, a lithium ion secondary battery, an NAPS battery and a redox flow battery have been developed, and systems of a suitable device configuration and an electric capacity to respective uses such as for storage scale, instantaneous failure countermeasure, system power levelling, and load leveling (utilizing a night time power), for example, in ordinary homes, power stations and workplaces have been proposed.

For example, it is said that the NAS battery has a large capacity and a long life and there has been proposed a system of introducing the same on a mega-watt scale to large-scale renewable energy power stations such as wind farms and mega solar power plants and utilizing the same in leveling for system coordination. Since the lithium ion secondary battery is excellent in the storage capacity per unit weight, has a high charge/discharge efficiency, and can provide a high output, devices of various capacities have been marketed as a domestic back-up system from respective companies, particularly, after the Great East Japan earthquake. Since the lead storage battery has a high reliability and requires less cost per storage capacity, extensive use thereof has been proposed, for example, in a load leveling for ordinary homes or workplaces and leveling for the renewable energy power stations.

The redox flow battery has a device constitution different from that of the batteries described above. Metal ions dissolved in a solution are used as an active material and charge/discharge is taken place by a redox reaction of the metal ions. Since the active material is stored as a liquid in a tank, a capacity of the battery can be increased easily. Accordingly, the utilization for the load leveling in the workplaces and the leveling use in the renewable energy power generation stations has been proposed.

For the configuration of the active material, vanadium type or iron/chromium type, etc. have been proposed so far. Patent Literature 1 proposes a redox flow battery using manganese ions as a positive electrode active material and titanium ions or tin ions as a negative electrode active material, thereby improving a voltaic power. Further, Patent Literature 2 proposes a redox flow battery intending to increase the capacity by slurrifying to fluidize a solid active material in an organic solvent of a lithium secondary battery.

### Prior Art Documents:

### Patent Literature:

Patent Literature 1: Japanese Patent Application Laid-Open No. 2011-210696
Patent Literature 2: Japanese Translation of PCT international Application Publication No. 2011-524074

### Summary of Invention:

### Technical Problem:

As has been described above, storage batteries for power storage have various constitutions and systems suitable to applications depending on respective characteristics have been proposed. For introduction of a great amount of renewable energy power expected in the feature, utilization of the NAS battery or the redox flow battery suitable to large scale power storage is preferred. However, since the NAS battery or the redox flow battery utilizing an organic solvent proposed in Patent Literature 2 involves a problem of combustion, complete shielding from external atmosphere is necessary. Further, the redox flow battery using the metal ions of Patent Literature 1, etc. has a low electric capacity per unit cell, and there is a problem of self-discharging due to mixing of the metal ions. Such problems increase the device cost to hinder the increase of the capacity for the power storage.

On the other hand, scale-up for the wind power generation equipment or the solar photovoltaic power generation equipment has been advanced and there is a world wide trend of increasing the ratio of introducing power derived from the renewable energy and it is considered that the demand for increasing the capacity of the storage equipment for adjusting a demand-supply imbalance of the power will increase rapidly in the feature.

As described above, while the needs for the storage system that stores the power derived from the renewable energy is increasing more and more, a subject still exists in attaining a large-scale storage by existent batteries as described above.

US 2011/020848 A1 discloses a redox flow device in which at least one of the electrode active materials is a semi-solid or condensed ion storing material.

US 2010/0291429 A1 discloses an electrochemical energy storage device having nano-fluid anolyte and catolyte.

The present invention intends to provide a lasting and cheap power storage device suitable to a large-scale storage of power derived from renewable energy.

This object is accomplished by the features of claim 1.

### Solution to Problem:

The gist of the present invention for solving the subject is as described below.

A battery device includes: a charge/discharge cell unit in which a positive electrode collector and a negative electrode collector are separated by a partition wall; a storage tank for positive electrode in which an electrolyte containing a positive electrode active material is stored; a storage tank for negative electrode in which an electrolyte containing a negative electrode active material is stored; and a circulation pump and a liquid delivery pipeline for supplying under circulation the electrolytes stored in the storage tank for the positive electrode and the storage tank for the negative electrode to the positive electrode and the negative electrode respectively, in which micro carrier particles are contained in the electrolyte stored in the storage tank for the negative electrode, and the active material for the negative electrode is precipitated to a surface of the micro carrier particles during charging, and the active material for the negative electrode is dissolved from the micro carrier particles during discharging, thereby performing charge/discharge. The negative electrode active material is zinc, lead or tin and is formed in a solid state on an inner wall of the storage tank for the negative electrode. The electrolyte is an aqueous solution.

### 5 Advantageous Effects of Invention:

According to the present invention, a large-capacity power storage device suitable to a large-scale storage of an electric power derived from a renewable energy can be provided.

### Brief Description of Drawings:

Figure 1 is a configurational view of a power storage and transportation system of this example.
Figure 2 is a view for a case of a configuration of members for a power storage device according to this example.
Figure 3 is a graph showing discharge characteristics of a negative electrode when fine particles of Zn are used as a negative electrode active material.
Figure 4 is a graph showing discharge characteristics of a unit cell using Zn and Ni as active materials

### Description of Embodiments:

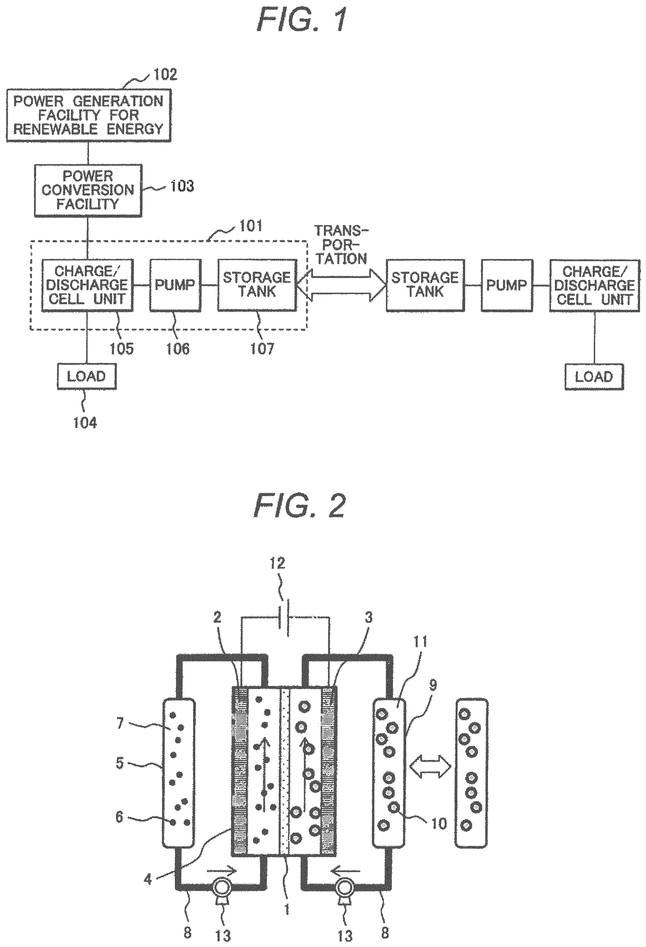

Fig. 1 is a configurational view of a power storage and transportation system according to an example of the present invention. The power storage and transportation system of this example includes a renewable energy power generation facility 102, a power conversion facility 103, a charge/discharge cell unit 105 for performing charge/discharge, a storage tank 107 for storing an electrolyte which contains an active material, and a circulation pump 106 for circulating the electrolyte which contains the active material. The charge/discharge cell unit 105 is connected with a load 104 and supplies electric power in accordance with the demand of the load. The charge/discharge cell unit 105, the circulation pump 106 and the storage tank 107 are collectively referred to as a power storage device 101.

Wind power generation, solar photovoltaic power generation, solar thermal power generation, water power generation, etc. are preferred as the renewable energy power generation facility 102, but they are not restrictive and any power generation facility may be used so long as the facility does not emit carbon dioxide. Further internal combustion engine power generators which utilize fuels not substantially emitting carbon dioxide, for example, biomass or bio-ethanol such as a wood chips or a fermentation gas may also be used. Power generated from the renewable energy power generation facility is sent to a power conversion facility. In this case, the generated power is a fluctuating power.

The power conversion facility 103 converts power generated from the renewable energy power generation facility 102 into a direct current power and supplies the same to the charge/discharge cell unit 105. It may suffice that the direct current power can be supplied and a facility for leveling the electric power is not necessary. Accordingly, the power storage and transportation system of this example is configured such that the fluctuating power generated from the renewable energy power generation facility is supplied to the charge/discharge cell unit. In a case of using the renewable energy power generation facility 102 capable of generating a direct current power as in a solar photovoltaic power generation facility, the power distribution facility 103 may be omitted, and the renewable energy power generation facility 102 and the charge/discharge cell unit 105 may be configured so as to be connected directly.

The power storage device 101 includes the charge/discharge cell unit 105, circulation pump 106, and storage tank 107. Since the power storage device 101 of this example stores an electrolyte containing an active material in the storage tank 107 in the same manner as a redox flow battery, the power storage capacity can be increased easily merely by increasing the volume of the tank. Further, since the charge/discharge cell unit which performs charge;discharge and the storage tank are separated, power can be stored at a theoretical charge/discharge capacity when the volume of the storage tank is designed sufficiently large relative to the charge/discharge cell unit, whereas there is a large difference between the actual charge/discharge capacity and the theoretical charge/discharge capacity in other types of batteries because a collector and a partition wall are present. This means that as the storage capacity is larger, the ratio of the charge/discharge cell unit is decreased to reduce the power storage cost, which is suitable to the introduction to a large-scale power generation facility. Further, since the discharge capacity and the output can be designed independently by the separation of the charge/discharge cell unit that performs charge/discharge and the storage tank, the degree of freedom for the system configuration is high and it can correspond also to the application use at a low output and requiring a long charge/discharge time or application use at a super large output and a low capacity.

Further, the output can be controlled easily in a single device by dividing a cell that forms the charge/discharge cell unit 105 by a serial stack or the like into plurality and providing an on-off valve to a liquid delivery pipeline distributed to each of the cells and controlling the flow of the electrolyte containing the active material on the cell base. For example, when charging reaction is performed in all of the cells by flowing the electrolyte containing the active material through a plurality of cells during charging, and discharge is performed by flowing the electrolyte containing the active material only to the unit cell, the power charged at a large output in a short time can be used at a low output for a long time.

Further, since the renewable energy power generation facilities 102 are generally dispersed in remote areas and system lines are often poor or not present, it is necessary to establish means for transporting generated power to consumption areas. On the other hand, in the case of the power storage device 101 of this example, the electric power can be transferred by transporting the storage tank without relying on the system lines when the charge/discharge cell unit 105 is located at a different place. In this example, since the active material is precipitated on the surface of micro carrier particles during charging to form a solid state at a high density, a storage tank having a high energy density can be transported. Accordingly, a large-capacity power can be transported at once and transportation cost can be kept low compared with a case of the transporting cells of other types. Further, possibility of ignition, etc. can be decreased and an open-system storage tank at a reduced cost can be utilized by using an aqueous solution for the electrolyte.

In the existent redox flow cell, metal ions are used as the active material and charge/discharge were performed by utilizing a reaction between the metal ions each other. In this case, since the amount of the metal ions soluble to the electrolyte was restricted, the electric capacity per unit cell was low and increase of the capacity was difficult. On the contrary, the power storage device of the invention has a feature of using a solid active material at least during charging or discharging. The solid active material has an energy density higher than that of the metal ions in the electrolyte and the capacity of the power storage device can be increased by circulating the solid active material as described above.

Fig. 2 illustrates an example of a configuration of the power storage device 101. The power storage device includes a charge/discharge cell unit, a circulation pump, a liquid delivery pipeline and a storage tank. The charge/discharge cell unit includes a negative electrode collector 2, a positive electrode collector 3, a partition wall 1 and a casing 4 and is connected with a power source 12. An electrolyte 7 containing a negative electrode active material and micro carrier particles 6 is stored in a storage tank 5 for a negative electrode. The storage tank 5 for the negative electrode and the charge/discharge cell are connected by way of a liquid delivery pipeline 8, and the electrolyte 7 containing the negative electrode active material and the micro carrier particles 6 in the storage tank 5 for the negative electrode is supplied under circulation to the negative electrode of the charge/discharge cell by a circulation pump 13. Further, an electrolyte 11 containing a positive electrode active material 10 is stored in a storage tank 9 for positive electrode. The storage tank 9 for positive electrode and the charge/discharge cell are connected by way of a liquid delivery pipeline 8, and the electrolyte 11 containing the positive electrode active material 10 in the storage tank 9 for positive electrode is supplied under circulation to the positive electrode of the charge/discharge cell by a circulation pump 13.

The active materials are different between the positive electrode and the negative electrode and a material having a large electric capacity is preferred. Further, since water electrolysis is caused in an aqueous solution, a material having a high overvoltage to the water electrolysis is preferred for the active material.

Specifically, the negative electrode active material is a material capable of charge/discharge by a dissolution-precipitation reaction and includes zinc, lead and tin. Among them, zinc having a low toxicity and a low precipitation potential is most preferred.

The micro carrier particles 6 are used for precipitating the negative electrode active material on the surface during charging. Further, discharging is performed by dissolution of the negative electrode active material precipitated on the surface. It is preferred that the micro carrier particle 6 has a small particle diameter and a high electroconductivity, a chemical and physical stability, and a high adhesion with the negative electrode active material. Accordingly, the material is preferably a metal and includes copper, aluminum, nickel or the like as a candidate. The negative electrode active material and the micro carrier particle may be an identical material. Further, the material may have a structure of a metal only at the surface and a resin in the inside. Further, the material may be a micro particle of carbon such as a carbon black. However, since it is a feature of the invention to use an aqueous electrolyte system, it is necessary to apply a hydrophilic treatment to a surface of the micro carbon particle. Specifically, the treatment includes immersion in a concentrated nitric acid or a hydrogen peroxide aqueous solution, or an oxygen plasma treatment.

Further, it is preferred that a particle diameter of the micro carrier particle 6 is smaller. Since a micro particle of a small particle diameter has a high specific surface area, the negative electrode active material tends to be precipitated, and this is advantageous for increasing the capacity. Further, this may also facilitate correspondence to charge/discharge at a high output. However, if the particle diameter is excessively small, the particles are aggregated tending to cause a problem such as a clogging of the pipeline. Further, since the storage capacity is determined depending on the precipitation amount of the active material, a large particle diameter is also allowable when the precipitation thickness of the active material is large. In terms of calculation, the storage capacity is identical between a case of precipitating 1 µm active material uniformly on the surface of a micro carrier particle of 5 µm in diameter and a case of precipitating 10 µm active material uniformly on the surface of micro carrier particle of 50 µm in diameter. Then, considering an easy handlability and the specific surface area, the particle diameter of the micro carrier particle is preferably from 0.1 µm to 1000 µm, and is more preferably from 1 µm to 500 µm. In a case of aggregates, the particle diameter means the size of the entire aggregate. The shape of the micro carrier particle is not particularly defined.

For the positive electrode active material 10, a material capable of charge/discharge by a dissolution-precipitation reaction or a material capable of charge/discharge due to a change of state between oxides and hydroxides is used preferably. Materials that are electrolytically precipitated in a dissolution-precipitation reaction include a metal selected from copper, nickel, cobalt and silver or an alloy thereof, or a halogen element such as bromine or iodine, for example. The material capable of charge/discharge by the state change between the oxides and the hydroxides includes nickel, manganese and iridium, for example. In addition, atmospheric oxygen can also be used as the positive electrode active material 10.

It may suffice that the electrolytes 7 and 11 are an aqueous solution and have electroconductivity, and an identical material is used for the positive electrode and the negative electrode. Sulfuric acid, potassium hydroxide or the like utilized in usual cells is utilized in accordance with characteristics of the active material. For example, when zinc is used for the negative electrode active material and copper is used for the positive electrode active material, a Daniell cell is formed by using sulfuric acid for the electrolyte. When zinc is used for the negative electrode active material and nickel is used for the positive electrode active material, and potassium hydroxide is preferably used for the electrolyte. When bromine is used for the positive electrode active material, zinc bromide or ammonium bromide is preferably used for the electrolyte. Since the negative electrode collector 2 serves to supply an electric current in contact with the micro carrier particles 6, it has preferably higher electroconductivity and a metal such as copper, titanium, SUS, nickel and gold, or an alloy containing the metal is preferred. The material may be identical with that of the active material and a carbon material may be used as the collector. With reference to the shape, it is not necessary that the collector has a high specific surface area since the micro carrier particle has a high specific surface area when the micro carrier particles are circulated, and the collector electrode may be any of a plate, a porous body, a mesh, an expanded metal, a fiber, a felt, and a non-woven fabric. Further, an identical configuration with that of the negative electrode collector 2 is used also for the positive electrode collector 3.

It is necessary that the partition wall 1 is porous so as not to hinder the movement of ions contributing to charge/discharge reaction and it is necessary that the partition wall has such a strength as not to be fractured by the circulation of the micro carrier particles. Further, it is necessary that the partition wall is insulative and chemically stable. Then, resin materials such as fluoro resin, polyethylene, polypropylene or polyimide which is made porous is preferred as the material. Further, an ion exchange membrane such as a perfluorosulfonic acid resin may also be used.

It may suffice that the material of the storage tank, the casing and the pipeline is chemically stable and has an insulation property and the strength. The material is preferably formed of a resin. However, when a closed circuit potential is higher than that of the negative electrode active material in the storage tank 5 for the negative electrode, the active material is dissolved to cause self-discharge by forming a local cell with the active material precipitated on the surface of the micro carrier particle 6. Then, it is preferred to apply a treatment for preventing self discharge such as a precipitation of the active material to an inner wall of the storage tank 5 or an introduction of a counter electrode to apply a predetermined voltage. In view of the cost and the maintenance performance, it is preferred to dispose the solid active material on the inner wall. The disposing method includes a coating to the inner wall of the storage tank or a dispersion of particles having large particle diameters, for example.

For the storage tank, a release valve for releasing a gas when it evolves upon charge/discharge reaction to the outside is preferably provided. Since the gas evolves if a voltage exceeds a predetermined level during over charging, the release valve is not necessary when the voltage can be controlled precisely. However, the precise control of the voltage needs control equipment having high performance. Since control of power is difficult particularly in the renewable energy power generation facility in which the power fluctuates, the release valve is disposed preferably to the storage tank with a view point of reducing the system cost and facilitating a control algorithm. Further, the release valve is preferably disposed by way of a gas-liquid separation mechanism such as a gas-liquid separation membrane in order to prevent a leakage of the electrolyte.

Then, it was confirmed by the following method that a charge/discharge reaction utilizing the solid state active material of this example is possible by the following method.

### (Evaluation 1)

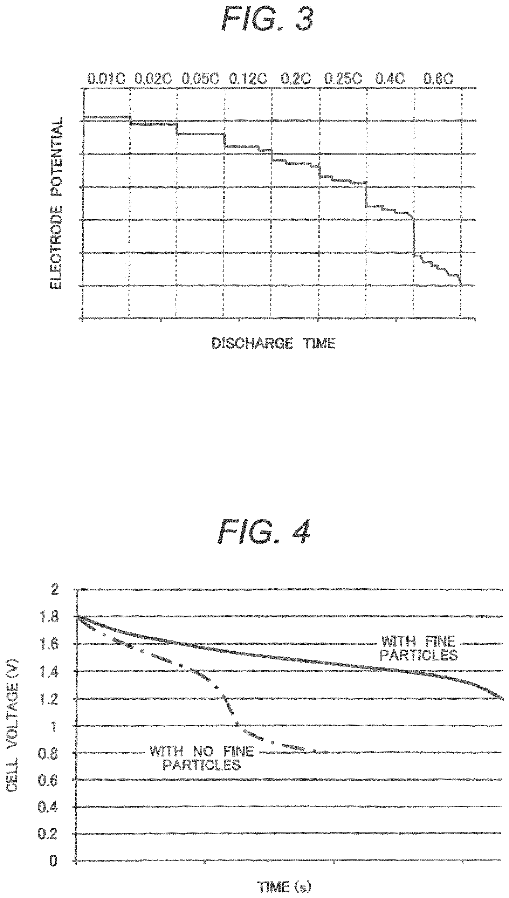

Fig. 3 shows a discharge curve of a negative electrode when micro Zn particles are used as the negative electrode active material. In this case, the micro carrier particles are also formed of the micro Zn particles. A Cu plate was utilized for the collector and the electrode surface was defined to 1 cm². 100 mg of the micro Zn particles having a diameter of 100 µm were placed on a Cu electrode and retained by a polyethylene porous film having a thickness of 0.1 mm. An aqueous KOH solution was used for the solution. A Pt wire was used for a counter-electrode and an Ag/AgCl electrode was used for a reference electrode, and a discharge curve at a single positive electrode was measured. The ordinate denotes a potential electrode and the abscissa denotes a discharge time, in which a potential behavior is shown at each current density. When the potential behavior was measured upon discharge in a constant current mode from 0.01C to 0.6C, the potential tended to lower as the current density was higher, and it could be confirmed that the discharging was possible in all the current modes.

### (Evaluation 2)

Measurement identical with that of Evaluation 1 was performed also on the positive electrode. An Au plate was utilized for the collector and the electrode area was defined as 1 cm². 100 mg of micro Cu particles having the diameter of 150 µm were placed as the active material on the Au electrode, and retained and fixed by a polyethylene porous membrane having a thickness of 0.1 mm. An aqueous H₂SO₄ solution was used for the solution. Other conditions are identical with those for the negative electrode. When the potential behavior was measured upon discharging in a constant current mode from 0.01C to 0.6C, the potential tended to lower as the current density was higher and it could be confirmed that the discharging was possible in all the current modes.

Based on Evaluations 1 and 2, it could be confirmed that a discharge process of 0.6C equivalent with that of a lead storage battery was possible on both of the positive electrode and the negative electrode also in the electrode utilizing the solid active material which constitutes the feature of this example.

### (Evaluation 3)

Then, Zn as the active material was precipitated while introducing micro Cu particles having the diameter of 150 µm as the micro carrier particles on a Cu plate electrode. An Ni porous body was used for the counter electrode to constitute a two electrode system, and an aqueous KOH solution containing zinc oxide of 10 wt% as the active material was used for the solution. Electrolytic precipitation was performed by applying a constant voltage at 1.9 V. As a result, micro Cu particles which have Zn of about 1 µm precipitated on a surface thereof could be obtained. Thus, it could be confirmed that a charge process due to the precipitation of the active material to the micro carrier particles as the feature of this example.

### (Evaluation 4)

Then, an example of measuring the discharge behavior is shown by using the power storage device illustrated in Fig. 2. Micro Ni particles were selected for the positive electrode active material, micro Cu particles were selected for the micro carrier particles on the side of the negative electrode, and the particle diameter was defined to 150 µm for both of them. An Ni expended metal was used for the positive electrode collector and a Cu mesh was used for the negative electrode collector. A porous polyethylene having a thickness of 0.1 µm was used for the partition wall and an aqueous KOH solution containing 10 wt% zinc oxide was used for the electrolyte solution. The charge/discharge reaction on the positive electrode is a state change reaction between an oxide and a hydroxide, in which the reaction formula is as follows.

NiOOH + H₂O + e ↔ Ni (OH)₂ + OH⁻

And the theoretical voltage is 0.52 V. Further, a charge/discharge reaction on the negative electrode is a dissolution-precipitation reaction, in which the reaction formula is as follows.

Zn(OH)₂ + 2e ↔ Zn + 2OH⁻

And the theoretical voltage is -1.24 V. A reaction of Zn precipitation and NiOOH formation proceeds during charging, and Zn dissolution reaction Ni(OH)₂ forming reaction proceed during discharging. Since a theoretical electromotive voltage is 1.74 V, the charging was performed at a unit cell voltage of 1.9 V for a predetermined time and the discharge behavior was measured in a constant current mode. Fig. 5 shows a discharge curve of a unit cell according to this example. The ordinate denotes a voltage and the abscissa denotes a discharge time. As a comparison, a discharge curve of a unit cell not using the micro carrier particles is also shown in Fig. 5. For the unit cell voltage of 1.2 V as a termination voltage, the discharge time can be measured for the unit cell containing the micro carrier particles which is three times or more than the unit cell not using the micro carrier particles. This is an advantageous effect that the storage capacity is improved due to an increase in the specific surface area of the micro carrier particles.

### Reference Signs List:

1: partition wall, 2: negative electrode collector, 3: positive electrode collector, 4: casing, 5: storage tank for negative electrode, 6: micro carrier particles, 7: electrolyte, 8: liquid delivery pipeline, 9: storage tank for positive electrode, 10: positive electrode active material, 11: electrolyte, 12: power source, 13: circulation pump, 101: power storage device, 102: renewable energy power generation facility, 103: power conversion facility, 103: load, 105: charge/discharge cell unit, 107: storage tank.

## Claims

1. A power storage device (101) comprising:
a charge/discharge cell unit (105) in which a positive electrode collector (3) and a negative electrode collector (2) are separated by a partition wall (1);
a storage tank (9) for a positive electrode storing an electrolyte (11) containing a positive electrode active material (10);
a storage tank (5) for a negative electrode storing an electrolyte (7) containing a negative electrode active material; and
a circulation pump (13) and a liquid delivery pipeline (8) for supplying under a circulation the electrolytes (7, 11) stored in the storage tank (9) for the positive electrode and the storage tank (5) for the negative electrode to the positive electrode and the negative electrode respectively,
wherein
micro carrier particles (6) are contained in the electrolyte (7) stored in the storage tank (5) for the negative electrode,
the active material for the negative electrode is precipitated to a surface of the micro carrier particles (6) during a charging, and the active material for the negative electrode is dissolved from the micro carrier particles (6) during a discharging, thereby performing a charge/discharge, and **characterized in that** the negative electrode active material in a solid state is formed on an inner wall of the storage tank (5) for the negative electrode,
the negative electrode active material is zinc, lead or tin, and
the electrolyte is an aqueous solution.

2. The power storage device according to claim 1,
wherein a particle diameter of the micro carrier particle is from 0.1 µm to 1000 µm.

3. The power storage device according to claim 1,
wherein the charge/discharge is performed by a dissolution-precipitation reaction of the positive electrode active material (10), or a structural change between an oxide and a hydroxide.

4. The power storage device according to claim 3,
wherein the positive electrode active material (10) is a metal selected from copper, nickel, cobalt and silver, or an alloy thereof, bromine or iodine, or an oxide of a metal selected from copper, manganese, iridium and nickel.

5. The power storage device according to claim 1,
wherein the charge-discharge cell unit (105) includes a plurality of cells, an on-off valve is provided to the liquid delivery pipeline distributed to each of the cells, and a flow of the electrolyte containing the active material is controlled by the on-off valve based on a unit of the cell.

## Patentansprüche

1. Stromspeichervorrichtung (101), die umfasst:
eine aufladbare/entladbare Zelleneinheit (105), in der ein Kollektor (3) der positiven Elektrode und ein Kollektor (2) der negativen Elektrode durch eine Trennwand (1) getrennt sind;
einen Speichertank (9) für eine positive Elektrode, der einen Elektrolyten (11) speichert, der ein aktives Material (10) der positiven Elektrode enthält;
einen Speichertank (5) für eine negative Elektrode, der einen Elektrolyten (7) speichert, der ein aktives Material der negativen Elektrode enthält,
und
eine Zirkulationspumpe (13) und eine Flüssigkeits-Förderleitung (8) zur Lieferung der Elektrolyte (7, 11), die in dem Speichertank (9) für die positive Elektrode und dem Speichertank (5) für die negative Elektrode gespeichert sind, unter einer Zirkulation zu der positiven beziehungsweise der negativen Elektrode,
wobei
Mikro-Trägerpartikel (6) in dem Elektrolyten (7) enthalten sind, der in dem Speichertank (5) für die negative Elektrode gespeichert ist,
das aktive Material für die negative Elektrode während einer Ladung auf der Oberfläche der Mikro-Trägerpartikel (6) abgeschieden wird und das aktive Material für die negative Elektrode während einer Entladung von den Mikro-Trägerpartikeln (6) gelöst wird, wodurch eine Ladung/Entladung erfolgt,
und die
**dadurch gekennzeichnet ist, dass**
das aktive Material der negativen Elektrode in einem festen Zustand an einer Innenwand des Speichertanks (5) für die negative Elektrode ausgebildet wird,
das aktive Material der negativen Elektrode Zink, Blei oder Zinn ist und
der Elektrolyt eine wässerige Lösung ist.

2. Stromspeichervorrichtung nach Anspruch 1,
wobei der Partikeldurchmesser der Mikro-Trägerpartikel 0,1 µm bis 1000 µm beträgt.

3. Stromspeichervorrichtung nach Anspruch 1,
wobei die Ladung/Entladung durch eine Lösungs-Fällungs-Reaktion des aktiven Materials (10) der positiven Elektrode oder eine Strukturänderung zwischen einem Oxid und einem Hydroxid erfolgt.

4. Stromspeichervorrichtung nach Anspruch 3,
wobei das aktive Material (10) der positiven Elektrode ein unter Kupfer, Nickel, Cobalt und Silber ausgewähltes Metall oder eine Legierung davon, Brom oder Iod oder ein Oxid eines unter Kupfer, Mangan, Iridium und Nickel ausgewählten Metalls ist.

5. Stromspeichervorrichtung nach Anspruch 1,
wobei die aufladbare/entladbare Zelleneinheit (105) eine Vielzahl von Zellen umfasst, ein EIN-AUS-Ventil in der Flüssigkeits-Förderleitung vorgesehen ist, die auf jede der Zellen aufgeteilt ist, und der Umlauf des Elektrolyten, der das aktive Material enthält, durch das EIN-AUS-Ventil auf der Basis einer Zelleneinheit gesteuert wird.

## Revendications

1. Dispositif (101) de stockage d'énergie comprenant :
une unité (105) de cellules de charge/décharge dans laquelle un collecteur (3) d'électrode positive et un collecteur (2) d'électrode négative sont séparés par une paroi (1) ;
un réservoir (9) de stockage pour une électrode positive stockant un électrolyte (11) contenant un matériau actif (10) d'électrode positive ;
un réservoir (5) de stockage pour une électrode négative stockant un électrolyte (7) contenant un matériau actif d'électrode négative ; et
une pompe (13) de circulation et une canalisation (8) de fourniture de liquide pour alimenter en circulation les électrolytes (7, 11) stockés dans le réservoir (9) de stockage pour l'électrode positive et le réservoir (5) de stockage pour l'électrode négative jusqu'à l'électrode positive et l'électrode négative respectivement,
dans lequel
des microparticules support (6) sont contenues dans l'électrolyte (7) stocké dans le réservoir (5) de stockage pour l'électrode négative,
le matériau actif pour l'électrode négative est précipité jusqu'à une surface des microparticules support (6) lors d'une charge, et le matériau actif pour l'électrode négative est dissous depuis les microparticules support (6) lors d'une décharge, mettant ainsi en oeuvre une charge/décharge, et
**caractérisé en ce que**
le matériau actif d'électrode négative dans un état solide est formé sur une paroi intérieure du réservoir (5) de stockage pour l'électrode négative,
le matériau actif d'électrode négative est le zinc, le plomb ou l'étain, et
l'électrolyte est une solution aqueuse.

2. Dispositif de stockage d'énergie selon la revendication 1,
dans lequel un diamètre de particule de la microparticule support est de 0,1 µm à 1 000 µm.

3. Dispositif de stockage d'énergie selon la revendication 1,
dans lequel la charge/décharge est mise en oeuvre par une réaction de dissolution-précipitation du matériau actif (10) d'électrode positive, ou un changement structurel entre un oxyde et un hydroxyde.

4. Dispositif de stockage d'énergie selon la revendication 3,
dans lequel le matériau actif (10) d'électrode positive est un métal choisi parmi le cuivre, le nickel, le cobalt et l'argent, ou un alliage de ceux-ci, le brome ou l'iode, ou un oxyde d'un métal choisi parmi le cuivre, le manganèse, l'iridium et le nickel.

5. Dispositif de stockage d'énergie selon la revendication 1,
dans lequel l'unité (105) de cellules de charge/décharge inclut une pluralité de cellules, une vanne ouvert/fermé est prévue sur la canalisation de fourniture de liquide distribuée jusqu'à chacune des cellules, et un flux de l'électrolyte contenant le matériau actif est commandé par la vanne ouvert/fermé sur la base d'une unité de la cellule.
